# EUROPEAN PATENT APPLICATION

(11) **EP 4 332 800 A1**
(43) Date of publication of application: **06.03.2024**
(21) Application number: 22193529.9
(22) Date of filing: 01.09.2022
(51) Int. Cl.: G06F 21/54, G06F 21/14

(54) **METHOD AND APPARATUS FOR INCREASING THE SECURITY OF SOFTWARE CODE THROUGH EXECUTION PATH DIVERSITY**

(71) Applicant: Irdeto B.V., 2132 LS Hoofddorp (NL)
(72) Inventor: MEERWALD-STADLER, Peter, 2132 LS Hoofdorp (NL)
(74) Representative: Boult Wade Tennant LLP

(57) **Abstract**

A system and method for creating secure software code. Original code is processed to determine memory states, which are dynamic during execution of the code. Selected functions of the code are duplicated and placed in parallel alternative control paths in order to create protected code with increased path diversity. The state of the memory, or a variable derived therefrom is used to select one of the alternative paths during execution of the protected code.

## Description

### BACKGROUND

Various mechanisms are known for increasing the security of software. For example, the software can be executed in tamper resistant hardware, or the software can be stored in encrypted form and only decrypted at runtime. However, in many situations, hardware devices, such as set top boxes, mobile phones and personal computers, are under the full control of a user who may be a potential attacker. This has spawned the field of "whitebox" software protection, in which it is assumed that a potential attacker has full access to the executing software.

In whitebox software protection, various obfuscation techniques are used to render the code complex and thus difficult for an attacker to analyze and hack. For example, the concept of "transformations" can be used. Transformations are merely substitutions made within the code in a manner that can be reversed during execution. "Path diversity" is another whitebox software obfuscation technique that makes it harder to analyze and modify an executable binary. The objective of conventional path diversity techniques is to create multiple alternatives, yet functionally equivalent, execution paths from one sequence of instructions. The selection of a path is made dependent on a variable (referred to as a "decision value" herein). As a result, in order to understand the control flow of the software, multiple possible execution paths must be analyzed, and their functional equivalence must be established.

For example, in the workflow where GetPassword() calls function ValidatePassword(), an attacker could tamper with ValidatePassword() to get a false password approved. As ValidatePassword() is a sequence of instructions that is critical for the security of the software, a software developer could choose to duplicate the function ValidatePassword() and, based on a condition (e.g., the month of the year as per PC system clock, or the CPU timestamp/cycle counter), decide which instance of ValidatePassword() will be executed. Using the month as the condition, would make it more difficult for an attacker to locate and patch all possible paths in a manner that would provide proper operation of the program. Further, it could take an attacker several months to patch all paths. For example, an attacker might miss an alternative code path and the cracked executable would become non-functional after the condition has changed (e.g., the month had changed).

Using the CPU timestamp/cycle counter (modulo 3) as a path selection condition may lead to a seemingly random selection of a code path and the equivalence of the duplicated code might not be readily apparent to the attacker due to obfuscation techniques, hence increasing the effort required to successfully attack the code. Code path diversity techniques are not limited to duplication of functions, but any sequence of instructions or basic blocks can be duplicated.

Different strategies can be adopted for creating path diversity. For example, the path can be made dependent on:
- a random value (e.g., by means of a PRNG),
- a time period (e.g. execute a different path each day of the week),
- platform configuration (e.g. execute a different path based on keyboard layout (English, German, etc.)
- the CPU's timestamp (e.g. x86 RDTSC instruction)
- a process identifier (e.g., take the same path until the executable is restarted)

A limitation to all of these conventional strategies is that obtaining the decision value requires calling well-known instructions, functions or system APIs (e.g., a CPUID or RDTSC instruction, the PRNG provided by the C runtime library, an operating system API such as GetSystemTime(), GetKeyboardLayout(), GetProcessId(), and the like). These functions can be discovered relatively easily and linked to the decision value by an attacker, thus revealing that they are used for path dependence. Alternatively, the return value of these functions can be altered to assume a desired value (e.g., a constant or all likely values to explore all execution paths).

Further, often binary program rewriting is required where only the binary code of the original software is available for creation of a secured version of the software. Using static program analysis, typically only limited information can be obtained about the state of the program, such as variable content. Therefore, it can be difficult for users tasked with increasing execution path diversity to find suitable data within the program state to be used as decision values. As a consequence, external decision values for path diversity are often used in existing methods. Further, the number of potential external decision values available for use is often limited to those accessible by known APIs that must be verified/tested for compatibility and variability. This can lead to problems when attempting to scale the protection methods to introduce large numbers of alternative paths, which can ultimately lead to the reuse of a relatively small number of decision values in conventional techniques. Such decision values, because they are limited in number to a known set, can be discovered or predicted relatively easily by an attacker.

### SUMMARY OF THE INVENTION

It is an object of the invention to improve the security of such path diversity strategies, and in particular to address the problems present in the existing methods discussed above.

The disclosed implementations leverage dynamic analysis ("profiling") to find memory locations having a relatively "high variability", i.e., which are updated relatively frequently. These memory locations are then used in combination with code generation (e.g., by binary rewriting, source code rewriting, etc.) as decision values for choosing an execution path from multiple execution paths during runtime of the code. This renders the execution path dependent on the dynamic state of the program during execution. Memory references to the program state typically occur often during program execution. Further, it is difficult to detect and discern the purpose of a memory access by observing the memory read accesses. Stated in another manner, careful and tedious analysis of the program would be required to ascertain which memory accesses are used for decision values and how they are used. Therefore, the disclosed implementations result in secured code that is difficult to successfully attack.

One aspect of the invention is a method of creating secured executable code by increasing the path diversity of original code, the method comprising: dynamically profiling the original code to collect data relating to update characteristics of one or more state indicators of the original code during execution of the original code; selecting at least one state indicator from amongst the one or more state indicators based on the dynamic profiling; and adding at least one new alternative execution path to the original binary code to thereby create the secured code, wherein execution of the at least one new alternative execution path is dependent on the value of the at least one state indicator.

According to a first aspect of the invention, there is provided a method of securing executable code, the method comprising: receiving usage data for a plurality of elements of the program state of the executable code during execution; identifying, from the received usage data, at least one element of the program state having at least one pre-defined update characteristic; and modifying the executable code to select between at least two equivalent execution paths of the executable code in dependence on the value of the identified at least one element of the program state. An element of the program state may correspond to (or be defined by or accessed through) any of: a main memory address; a cache memory address; a framebuffer address; a CPU register; a GPU register; an FPU register; a call stack (or part thereof); a variable of the executable code; and an address relating to a symbol of the executable code. As such an element of the program state may be the contents of any of: a main memory address; a cache memory address; a framebuffer address; a CPU register; a GPU register; an FPU register; a call stack (or part thereof); a variable of the executable code; and an address relating to a symbol of the executable code

In some embodiments the step of modifying comprises copying, in the executable code, operations from a first execution path of the executable code to generate a second execution path in the executable code, wherein the second executable path is functionally equivalent to the first execution path. In particular, an operation in the second execution path may be modified such that an intermediate result in the second executable path is dependent on the value of the at least one element of the program state.

In some further embodiments a first operation is modified to alter the intermediate result based on the value of the at least one element of the program state and a second operation is modified to compensate for (or reverse or otherwise undo the effect of) the alteration based on an expected value for the at least one element of the program state.

In some embodiments the method further comprises receiving call data for the first callable unit in one of the execution paths. Here, the step of identifying is (or comprises) identifying, from the received usage data and the received call data, the at least one element of the program state having the at least one pre-defined update characteristic at the start of the execution path. The call data may be generated by dynamically profiling the executable code.

Similarly, in some embodiments the usage data is generated by dynamically profiling the executable code. Such profiling may be the same as the profiling used to generate call data.

In some further embodiments dynamically profiling includes (or comprises) collecting a plurality of snapshots of the program state during execution. The plurality of snapshots may be collected periodically based on time. Additionally, or alternatively the plurality of snapshots may be collected based on (or in response to) the occurrence of events. Events may include any of, device (or hardware) events, input events, timer events, and so on.

In some embodiments the usage data comprises usage data generated during a plurality of execution instances of the executable code. The usage data may comprise a plurality of sets of usage data, each set of usage data corresponding to the usage of the plurality of elements of the program state during execution in a respective execution environment.

In some embodiments the usage data comprises one or more metrics for each of the plurality of elements of the program state. A metric may be any of: a measure of update frequency of an element of the program state during execution; a measure of a range of values taken by an element of the program state during execution; a measure of variance of the values taken by an element of the program state during execution; a number of updates of an element of the program state during execution; the values taken by an element of the program state during execution. The pre-defined update characteristic may require that the element of the program state having at least a threshold level of a metric.

In some embodiments the pre-defined update characteristic specifies any of: an update frequency; a measure of randomness of the values taken by the element of the program state; a measure of entropy of the values taken by the element of the program state; a variance of the values taken by the element of the program state.

According to a second aspect of the invention there is provided apparatus arranged to carry out any of the methods of the first aspect (or any embodiment thereof) discussed above. In particular, there is provided a protection system for securing executable code. The protection system comprising one or more processors configured to: receive usage data for a plurality of elements of the program state of the executable code during execution; identify, from the received usage data, at least one element of the program state having at least one pre-defined update characteristic; and modify the executable code to select between at least two equivalent execution paths of the executable code in dependence on the value of the identified at least one element of the program state. An element of the program state may correspond to (or be defined by or accessed through) any of: a main memory address; a cache memory address; a framebuffer address; a CPU register; a GPU register; an FPU register; a call stack (or part thereof); a variable of the executable code; and an address relating to a symbol of the executable code. As such an element of the program state may be the contents of any of: a main memory address; a cache memory address; a framebuffer address; a CPU register; a GPU register; an FPU register; a call stack (or part thereof); a variable of the executable code; and an address relating to a symbol of the executable code

According to a third aspect of the invention there is provided a computer program which, when executed by one or more processors, causes the one or more processors to carry out the method of the first aspect (or any embodiment thereof). The computer program may be stored on a non-transient computer readable medium.

### DESCRIPTION OF THE DRAWINGS

Embodiments of the invention will now be described, by way of example only, with reference to the accompanying drawings, in which:
Figure 1 schematically illustrates an example of a computer system 100;
Figure 2a schematically illustrates an example system 200 according to some embodiments of the invention;
Figure 2b schematically illustrates a scenario for securing an item of software in accordance with some embodiments of the invention;
Figure 2c schematically illustrates an example item of software (or executable) comprising two alternative execution paths;
Figure 3 is a flowchart illustrating an example method of operating the protection system according to some embodiments of the invention;
FIG. 4 is a flowchart of a process for creating secured code from original code in accordance with disclosed implementations.
FIG. 5 is a schematic representation of a diverse code flow path in secured software in accordance with disclosed implementations.

### DETAILED DESCRIPTION

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

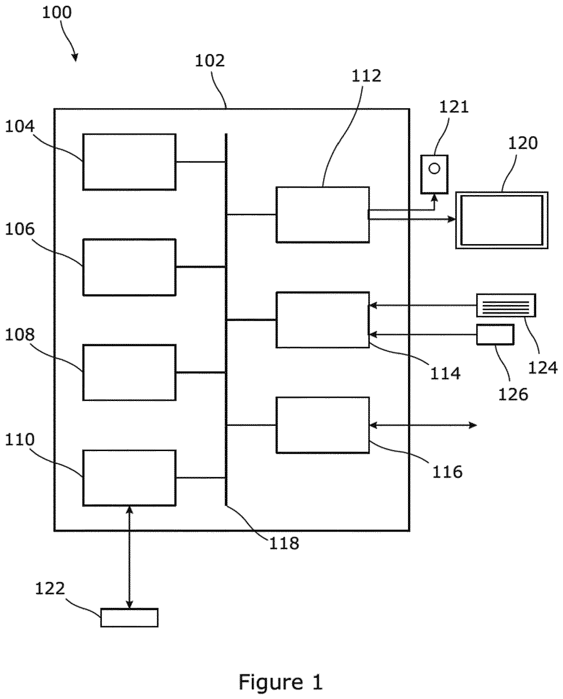

Figure 1 schematically illustrates an example of a computer system 100. The system 100 comprises a computer 102. The computer 102 comprises: a storage medium 104, a memory 106, a processor 108, an interface 110, a user output interface 112, a user input interface 114 and a network interface 116, which are all linked together over one or more communication buses 118.

The storage medium 104 may be any form of non-volatile data storage device such as one or more of a hard disk drive, a magnetic disc, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc.

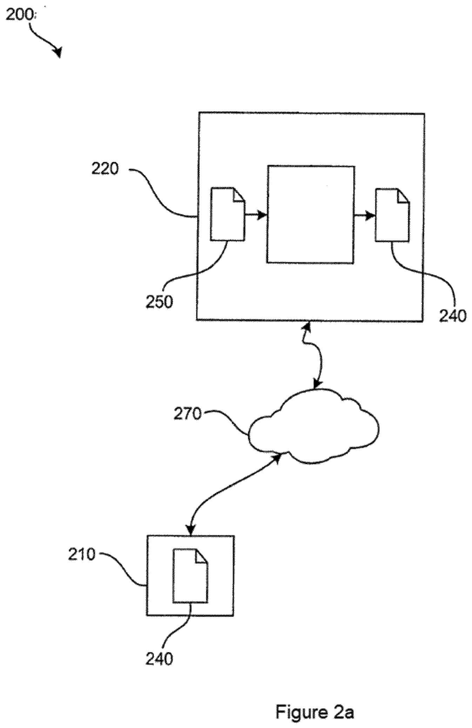

Figure 2a schematically illustrates an example system 200 according to some embodiments of the invention. The system 200 comprises a computer system (or client system or user system) 210, a protection system 220, and a network 270.

In summary, the computer system 210 is arranged to execute or process an item of software 240. The item of software 240 is a protected (or secured) item of software - the nature of the "protection" that has been applied to the item of software 240 (or which the item of software 240 incorporates or uses) shall be described in more detail later. The protection system 220 is responsible for generating the protected item of software 240 based on an initial item of software 250. As shall become apparent, the system 200 enables protection of an initial item of software 250, so that the resulting protected item of software 240 may be executed on a computer system 210.

The computer system 210, the protection system 220 may be arranged to communicate with each other over, or via, the network 270. The network 270 may be any kind of network suitable for transmitting or communicating data from the computer system 210 to the protection system 220 and vice versa. For example, the network 270 could comprise one or more of: a local area network, a wide area network, a metropolitan area network, the internet, a wireless communications network, a cable network, a digital broadcast network, a satellite communication network, a telephone network, etc. The computer system 210 and the protection system 220 may communicate over the network 270 via any suitable communication mechanism/protocol in order to communicate data with each other. However, it will be appreciated that other communication scenarios are possible.

Whilst figure 2a illustrates a single computer system 210, and a single protection system 220, it will be appreciated that there may be multiple computer systems 210 and/or multiple protection systems 220 and that figure 2a has been simplified for ease of illustration.

The computer system 210 and the protection system 220 may each be, or may each comprise, one or more computer systems 100 as described above with reference to figure 1. For example, the computer system 210 may be a personal computer, a server computer, a laptop, a mobile telephone, a tablet computer, a television, etc. Similarly, the protection system 220 may, for example, comprise one or more server computers.

The protection system 220 may be operated by separate entities, or may be operated by the same entity.

An operator of the computer system 210 may be an attacker, in that the operator may wish to launch an attack against (or based on or using) an item of software executed on the computer system 210. For example: (a) the item of software may contain, or generate, secret information that the attacker wishes to obtain (such as one or more cryptographic keys, one or more secret keys, data of other users, etc.) via the attack; (b) the attacker may try to use the item of software (in a manner not initially intended or authorized by the creator of the item of software) to achieve functionality to which the attacker is not entitled or authorized, such as by circumventing or thwarting security checks; (c) the attacker may wish to achieve new/alternative functionality not originally intended with the item of software; (d) the attacker may wish to use the item of software to try to gain unauthorized access to functionality or data from one or more servers (e.g. a server hosting a website associated with a webpage providing or comprising the item of software); etc.

A so-called "white-box" attack environment is an attack model for the execution of an item of software, in which the model identifies that an attacker has various capabilities as described in more detail below (i.e. the attacker can carry out certain actions/operations and has access to certain data). Therefore, if an attacker would have those capabilities when the item of software is actually being executed in a particular execution environment (e.g. using a particular computer/processor etc.) then one may say that the item of software is executing in a "white-box" environment. In the white-box attack environment, the attacker of the item of software is assumed to have full access to, and visibility of, the data being operated on (including intermediate values), memory contents and execution/process/control flow of the item of software. Moreover, in the white-box attack environment, the attacker is assumed to be able to modify the data being operated on, the memory contents and the execution/process/control flow of the item of software, for example by using a debugger - in this way, the attacker can experiment on, and try to manipulate the operation of, the item of software, with the aim of circumventing initially intended functionality and/or identifying secret information and/or for other purposes.

However, the item of software may need to use or store or generate secret information (e.g. one or more cryptographic keys or identifiers), where this information needs to remain hidden from, or unusable/inaccessible by, the attacker (except as part of the correct/intended functionality of the item of software); the item of software may need to execute different portions of code based on particular decision logic, where it is important to ensure that an attacker cannot force the software to execute one portion of code instead of another portion of code in contradiction to the decision logic; etc. The set-up, configuration and capabilities of the computer system 210 are not necessarily known (or fully known) to, and/or are not controllable (or fully controllable) by, the provider of the item of software, and so it can be assumed that the item of software may end up being executed in a white-box attack environment. The user of the computer system 210 can view, monitor and modify execution of such items of software, allowing an attacker to copy and modify the item of software and/or its data or control flow in an attempt to launch an attack against/using the item of software. This is why, instead of executing the initial item of software 250 on the computer system 210, the initial item of software 250 has one or more software protection techniques applied to it by the protection system 220, resulting in the protected item of software 240. It is this protected item of software 240 which is executed on the computer system 210. The protection techniques applied in order to generate the protected item of software 240 aim to make it difficult for an attacker to carry out a successful attack on the protected item of software 240, and/or aim to reduce/mitigate the consequences of such an attack by an attacker - i.e. the protection techniques aim to secure the initial item of software 250 against the white-box attack environment.

The protection system 220 is arranged to apply one or more "protections" to the item of software 250 to thereby generate and output the protected item of software 240. It will be appreciated that a number of different protection systems 220 may be used on an item of software 250 to apply different protections. Thus, a protection system is arranged to apply one or more "protections" to the initial item of software 250, or to a version of the item of software 250 that has already had one or more of these protections.

The initial item of software 250 and the protected item of software 240 may each comprise one or more computer programs (or software or modules) that may be stored as one or more files. Each file can contain or implement one or more functions. The initial item of software 250 and the protected item of software 240 may each be, or implement, one or more entire software applications, or one or more components for a software application (e.g. a library file), or a smaller component (e.g. a code snippet). The initial item of software 250 may comprise source code written in one or more languages, one or more of which may be the same as the language(s) for the protected item of software 240, although this is not necessary. The initial item of software 250 and the protected item of software 240 may each comprise compiled/executable code and/or source code (or interpreted code). The initial item of software 250 and the protected item of software 240 may comprise compiled code for execution as (part of) a native application at the computer system 210. The initial item of software 250 and the protected item of software 240 may comprise code for execution within a virtual machine executing on the computer system 210. The initial item of software 250 and the protected item of software 240 may comprise code for execution within a browser executing on the computer system 210 (e.g. as a webapp or code of a webpage).

The term "code" as used herein in relation to an item of software refers to instructions/commands of the item of software. In addition to code, the item of software (e.g. the initial item of software 250 and the protected item of software 240) may comprise data and/or other resources, so that execution of the "code" (or execution of the item of software) comprises executing some or all of these instructions/commands, where this execution might potentially involve using some of the data and/or other resources if present in the item of software. The term "software element" as used herein in relation to an item of software refers to code and/or other components (e.g. data and/or other resources/assets) of the item of software. Thus, a software element of (or for) an item of software may comprises (a) one or more pieces of code (e.g. one or more instructions/commands) of (or for) the item of software, and/or (b) one or more pieces of data or other resources of (or for) the item of software, and/or (c) one or more code blocks.

It will be appreciated that an item of software may comprise one or more callable units. A callable unit may be thought of as particular type (or subset of) of a software elements described above. A callable unit typically comprises one or more pieces of code (e.g. one or more instructions/commands) of (or for) the item of software. In some examples a callable unit may be a single executable instruction or command. A callable unit is typically arranged to be callable (or invocable or otherwise may be caused to be executed) by other code in the item of software. In other words, a callable unit may be or comprise one or more software routines. It will be understood that there are many types of routines known in the art including (but not limited to) subroutines, functions, procedures, methods, subprograms and so on. A software routine is usually arranged to, when executed, perform one or more tasks (or provide one or more elements of functionality). It will also be appreciated that a callable unit may comprise (or define or otherwise cause to be instantiated) one or more further callable units.

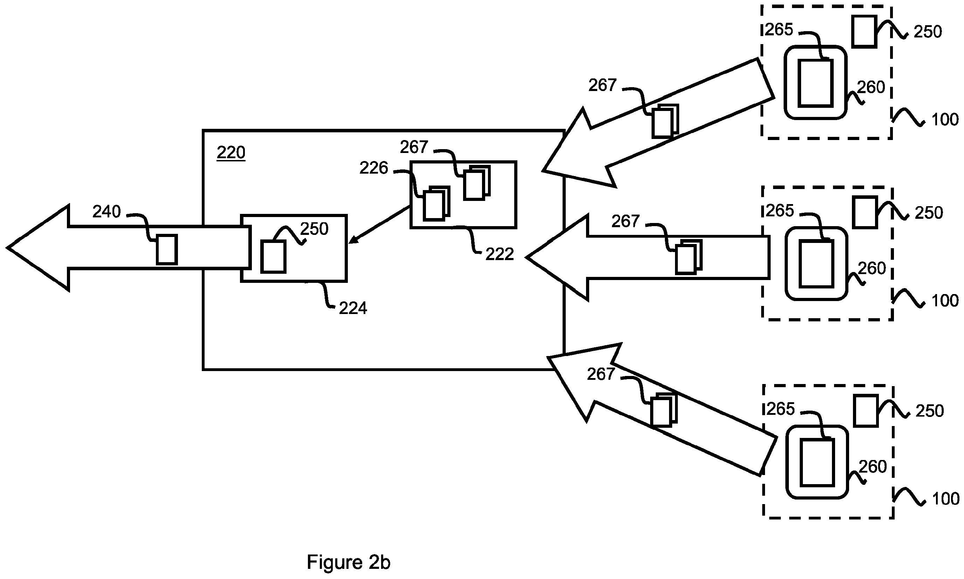

Figure 2b schematically illustrates a scenario in accordance with some embodiments of the invention. In the illustrated scenario it is required that an initial item of software 250 (here in the form of a binary executable or executable code) is secured by increasing path diversity. It will be understood that the item of software 250 typically is a program (or part of a program) run by a user to perform computational tasks.

As illustrated in figure 2b the executable code (or binary executable) 250 is run (or executed) as a plurality of instances 260. Each instance is run on a computer system such as the computer system 100 described above. For ease of understanding the figure 2a shows the instances 260 running on a single computer system 100. However, as described shortly below one or more instances 260 may be run on differing computer systems having different computer architectures (and/or hardware configurations and/or software configurations).

As will be understood by the skilled person a running (or executing) instance 260 of the executable code 250 will have a program state 265. The program state 265 is updated during the execution of the instance 260 and comprises the data, instructions and other stored values of the instance 260 at a given point in time. The program state 265 may be understood as the contents of all storage locations available to the instance 260 at a given point in time.

The program state 265 may be thought of as comprising a plurality of elements. An element of the program state being accessible (or reachable or readable) by the executable code. An element of the program state may be defined at the system level. In particular an element may be defined by any of one or more main memory (such as RAM) addresses (or a range of memory addresses) one or more cache memory addresses (or a range of cache memory addresses); one or more framebuffer addresses (or a range of framebuffer memory addresses); one or more CPU registers; one or more GPU registers; one or more FPU registers; a call stack (or part of a call stack); and so on. As such, it will be appreciated that the state element defined by such an address (or register or call stack part) may be considered to be (or comprise) the contents of such an address (or register or call stack part). In other words, an element may be defined as the contents of any of: one or more main memory (such as RAM) addresses (or a range of memory addresses); one or more cache memory addresses (or a range of cache memory addresses); one or more framebuffer addresses (or a range of framebuffer memory addresses); one or more CPU registers; one or more GPU registers; one or more FPU registers; a call stack (or part of a call stack); and so on. Additionally, or alternatively the program state may be defined at the program level. In particular an element may be defined by a variable (or other symbol) of the executable code. As such, it will be appreciated that the state element defined by a variable may be considered to be (or comprise) the contents of such a variable. In other words, an element may be defined as the contents of a variable (or other symbol) of the executable code. It will be understood that there may be overlap between program state elements. For example, where an element is defined by a variable, such an element may be defined as a particular symbol (i.e. the symbol for that variable) in a symbol table of the executable code. Such a symbol will also typically be linked (or otherwise defined in relation) to one or more main memory addresses. Such main memory addresses themselves may be considered to define elements of the program state. As such, an element of the program state may also correspond to a portion of another element of the program state.

Also it will be understood that the value of the program state changes during execution of the executable code. Consequently, the value of a given element of the program state may change during execution of the executable code. In the illustrated scenario, usage data 267 for a plurality of elements of the program state 265 are collected for each instance 260. The usage data for an element of the program state tracks (or represents or relates to) changes to the element of the program state 265 during execution of the executable code. In other words, the usage data 267 relates to changes to the element during the instance 260 (or during execution of the instance). The usage data may comprise one or more metrics for an element of the program state. Such metrics may relate to any of: the update frequency of the element during the instance; the range of values taken by an element during the instance; the variance of the values taken by an element during the instance; the number of updates (or changes) of the element during the instance; the number of reads of the element during the instance; the number of writes to the element during the instance; and so on.

In the scenario illustrated in figure 2b the computer system (or systems) executing the respective instances 260 are arranged to record (or gather or otherwise store) usage data for a plurality of elements of the program state 265 of the respective instances 260. Usage data 267 for an element of the program state 265 may be thought of as data that characterizes (at least in part) interactions (or usage) of the element during execution of the respective instance 260. For example, the usage data may be (or comprise) data representing access (or access patterns) of the element of the program state. Typically, the usage data comprises values for one or more metrics of access of an element of the program state.

The metrics may comprise any one or more of: a measure of update frequency of an element of the program state during execution; a range of values taken by an element of the program state during execution; a measure of variance of the values taken by an element of the program state during execution; a number of updates of an element of the program state during execution; the values taken by an element of the program state during execution; timestamps of updates to the value of the element during execution; time intervals between updates; type of update event, and so on.

It will be appreciated that such usage data 267 may form part of what is commonly referred to as profiling data. As such, in some embodiments the usage data 267 may be generated (or collected) by profiling (or dynamically profiling) the item of software 250 as the instances 260 are executed on the computer systems 100. Such profiling may also be known as dynamic program analysis. Examples of profiling tools for carrying out such dynamic profiling include: Intel Vtune, Valgrind, perf tools, Intel PIN, DynamoRIO, and so on. As the skilled person would understand there are numerous ways in which to carry out such dynamic profiling we will not discuss these in detail herein. However, we note that one way of dynamic profiling would comprise collecting a plurality of snapshots of the program state during execution. Such snapshots may be collected periodically based on time or on the occurrence of pre-defined events. The collected snapshots may then be directly analyzed to identify various usage data include element update frequency, ranges of values taken by elements, and so on.

The protection system 220 illustrated comprises an element identification module 222 and a code modification module 224. The protection system 220 is arranged to receive usage data 267 from each computer system 100 (or instance 260). It will be appreciated that the usage data for a given execution (or instance 260) may be received directly from the computer system 100. For example, the executable 250 may be modified (or instrumented) such that the instance 260 sends the usage data 267 to the protection system 220. Alternatively, a further executable (or helper program) may be run by the computer system which sends (or makes available) the usage data 267 to the protection system 220. Equally it will be appreciated that the protection system 220 may receive the usage data indirectly. For example, the usage data may be collected (or aggregated or otherwise) stored on another system from where the protection system 220 may access the usage data 267 when needed.

The element identification module 222 is arranged to identify (or select), from the received usage data, at least one element of the program state for use in selecting between execution paths of the executable code 250. Typically, the element identification module 222 is arranged to identify (or select) elements of the program state using one or more update characteristics 226. In other words, element identification module 222 is arranged to identify, from the received usage data, at least one element of the program state having at least one pre-defined update characteristic.

As will be described shortly below the update characteristic (or characteristics) may be pre-defined by the user of the protection system 220 in line with the required protection (or security) level to be applied to the initial item of software 250. An update characteristic may be (or comprise) a requirement on one or more metrics as discussed above. It will be understood that an update characteristic may be (or comprise) an absolute requirement. For example, an update characteristic may specify (or require) a metric be above (or below) a certain threshold value. An update characteristic may specify (or require) a metric to be equal to (or within a specified range of) a certain value. Alternatively, an update characteristic may be (or comprise) a relative requirement. For example, an update requirement may specify that the program state element having the maximum (or minimum) value of a given metric (compared to the other program state elements) be selected. An update characteristic may specify (or require) specify that the program state element has a value for a metric in a specified top (or bottom) percentile, and so on.

A pre-defined update characteristic may specify any of: a threshold update frequency; a threshold measure of randomness of the values taken by the element of the program state; a threshold measure of entropy of the values taken by the element of the program state; a threshold variance of the values taken by the element of the program state; and so on. As discussed above such threshold values may be specified as absolute values, or as relative terms.

The code modification module 224 is arranged to modify the executable code 250 to select between at least two equivalent execution paths of the executable code in dependence on the value of the identified at least one element of the program state. In this way the secured (or protected) version of the executable code (or item of software) 240 is generated as the modified executable code.

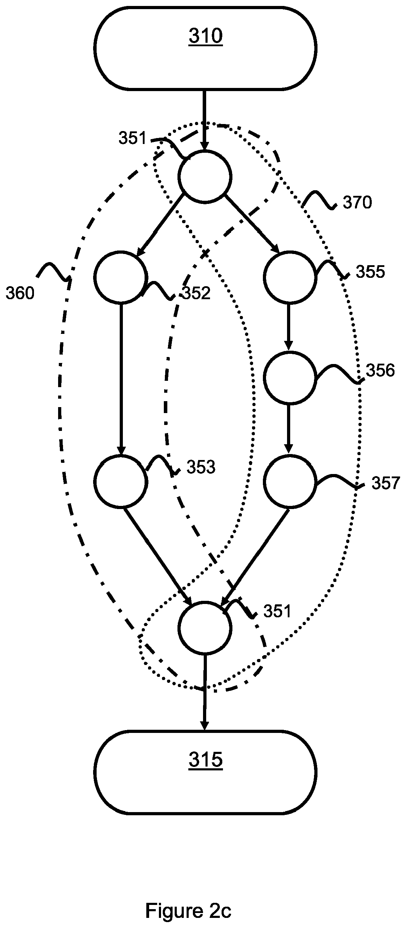

An example of an item of software 250; 240 having alternative (or equivalent) execution paths is described shortly below in relation to figure 2c. However, it will be appreciated that in some cases the initial item of software 250 (or executable code) will already have at least two equivalent execution paths. Such, alternative execution paths may have been introduced during the initial programming of the item of software 250. Equally, such alternative execution paths may have been introduced by a separate protection system, such as described in relation to figure 2a, which is arranged to introduce the alternative execution paths as part of applying another "protection".

In some embodiments the code modification module 224 is arranged to introduce or include or insert) one or more alternative execution paths into the item of software 250. For example, the code modification module 224 may be arranged to copy, in the item of software 250, operations from a first execution path of the item of software 250 to generate a second execution path in the item of software 250, wherein the second executable path is functionally equivalent to the first execution path. Typically, the code modification model 224 is arranged to operate (or modify) binary executable code, such as where the item of software 250 is in the form of a binary executable.

It will be appreciated that known techniques for increasing path diversity in an item of software may be used to generate the alternative execution paths. Examples of such known techniques include: Fred Cohen. "Operating System Protection through Program Evolution" Computers and Security, 12(6):pp565-584, October 1993 which discusses techniques to produce semantically equivalent but morphologically different code starting from a base implementation; Stephanie Forrest, Anil Somayaji, and David Ackley. "Building Diverse Computer Systems" Proceedings of the Sixth Workshop on Hot Topics in Operating Systems, pp67-72, 1997 which discusses randomly adding or deleting non-functional code and reordering code as transformation to construct path diversity; and Christian Collberg, Clark Thomborson, and Douglas Low. "A Taxonomy of Obfuscating Transformations" Technical Report 148, Department of Computer Sciences, The University of Auckland, 1997, which provides a taxonomy of obfuscating transformations and provides an example of path flow diversity construction.

It will be appreciated that the level of improved security given by the modification of the executable code described above may be adjusted based on properties or characteristics of the program state element (or elements) identified and used to select between the equivalent execution paths. For example, the more variability (or entropy or randomness) a program state element has (or displays) during execution the more unpredictable the overall control flow of the protected item of software 240 will be to an attacker, with different execution paths likely being taken. Also using a frequently accessed program state element to select between executing paths will increase the obfuscation in respect of which element is determining the selection of execution paths as an additional access of that element will be only one amongst many.

Figure 2c schematically illustrates an example item of software (or executable) 250; 240 comprising two alternative execution paths 360; 370. In figure 2c there is illustrated an input (or set of inputs) 310 and an output (or set of outputs) 315 and the example executable is arranged to go from the set of inputs 310 to the set of outputs 315. The executable is arranged to go from the set of inputs 310 to the set of outputs 315 by carrying out a number of operations 351; 352; 353; 354; 356; 357on the input state. In particular, the illustrated executable may follow the first execution path 360 which comprises carrying out the operation 351 on the set of inputs 310 followed by the operation 352, the operation 353, and the operation 354 to produce the set of outputs 315. Alternatively, the illustrated executable may follow the second execution path 370 which comprises carrying out the operation 351 on the set of inputs 310 followed by the operation 355, the operation 356, the operation 357, and the operation 354 to produce the set of outputs 315.

In this way it will be understood that the first execution path 360 and the second execution path 370 are alternative execution paths. In general, alternative execution paths may be understood as execution paths which for an arbitrary input each produce the same output as each other alternative execution paths. In other words, each alternative execution path is functionally equivalent to each other alternative execution path.

In the example execution paths 360; 370 shown in figure 2c the first execution path 360 comprises four operations and the second execution path 370 comprises five operations. In this way it will be understood that one or more of the operations of the first execution path 360 likely differ from one or more corresponding operations of the second execution path 370. However, it will be appreciated that in some embodiments two alternative executions paths 360; 370 may each comprise the same operations. The operations of one execution path may be duplicates of the operations of another execution path, such that multiple copies of the same operation occur in the executable code. In this way an attacker may find it difficult to ascertain which operation copy is used by a given execution path.

In some embodiments software code obfuscation techniques (such as whitebox obfuscation techniques) may be used to obfuscate one or more of the operation copies. In this way an attacker may find it difficult to even identify that an operation and an operation copy correspond and themselves are functionally equivalent. As such the attacker may find it difficult to identify that two alternative execution paths are functionally equivalent by inspection alone. Each of these effects means that, an attacker modifying an operation in order to carry out an attack on the executable will be unable to simply copy the modification to all of the copies of the operation.

It will be appreciated that the above example is simplified for ease of understanding. Whilst the execution paths shown go from the input to the output such execution paths may in some embodiments be only part of the overall execution path (or flow) of the instance of the executable. As such, the input 310 and the output 315 may be intermediate results or states of the instance and may themselves represent inputs or outputs to other parts of the overall execution path of the instance. In this way it will be appreciated that multiple groups of alternative execution paths may be present for different parts of the overall execution path through the instance or executable.

Similarly, the operations referred to herein may be single computations or functions, or may comprise more complex expressions or blocks of executable code. As such an operation may comprise one or more software routines (or sequence of instructions). It will be understood that there are many types of routines known in the art including (but not limited to) subroutines, functions, procedures, methods, subprograms and so on. A software routine is usually arranged to, when executed, perform one or more tasks (or provide one or more elements of functionality). It will be understood that an operation may in some cases comprise a single instruction.

In a similar manner it will be understood that an execution path may be (or correspond to) one or more callable units as described previously. As such, an execution path may be thought of, in some embodiments, as comprising one or more callable units. The start of the execution path may be considered to be the point where the first callable unit of the execution path is called. It would be understood that this would apply equally in cases even where the execution path comprises (or corresponded to) a single callable unit.

In a variant embodiment of that described above in relation to figure 2b the protection system 220 is arranged to receive call (or invocation) data from each computer system 100 (or instance 260). The call data may be received in the same ways as the usage data 267 discussed above. In some cases, the call data and the usage data 267 may be received as parts of profiling data. It will be appreciated that the call data may be generated using the dynamic profiling techniques and tools discussed above in relation to usage data 267.

The call data relates to one or more callable units in the item of software 250. The call data to be received comprises data collected or generated by the instance upon the invocation (or calling) of the one or more callable units of the item of software 250. The call data typically corresponds (or relates) to the calling (or execution) of the callable unit. In particular, the call data may comprise (or may be) invocation statistics which characterize the calling (or execution) of the callable unit. Typically, the call data are recorded (or collected) as a time series (or according to one or more time intervals or periods). For example, the call data may comprise timestamps (or other time indicia) for each call of the callable unit.

Here the identification module is arranged to identify, from the received usage data and the received call data for the first callable unit of the execution path, the at least one element of the program state having the at least one pre-defined update characteristic. In particular, in this variant the identification module may identify (or select) the element of the program state having the pre-defined update characteristic at the point (or execution time) where the first callable unit of the execution path.

It will be appreciated that in some cases a particular element of the program state has a pre-defined characteristic for only a certain portion of the execution of the item of software 250. For example, the update frequency of an element of the execution state may vary during execution. In this variant by taking account of the call data for the first (or initial) callable unit of the execution path, the identification unit can ensure that a program state element that has the pre-defined update characteristic at the point the execution path starts is identified. In other words, this allows the pre-defined update characteristic to be measured at the start of the execution path. Such operation further improves security as it further increases the likelihood that state elements selected for controlling the selection of execution paths are uncorrelated with the program flow at the selection point.

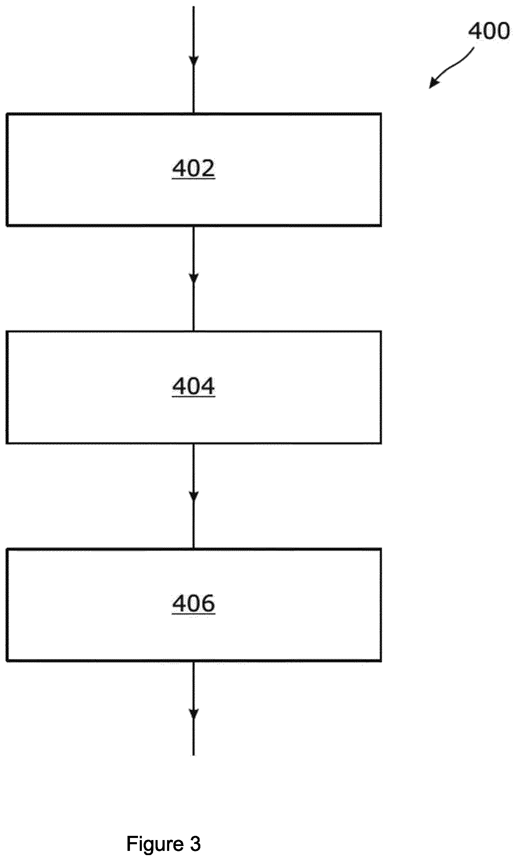

Figure 3 is a flowchart illustrating an example method 400 of operating the protection system 220 according to some embodiments of the invention.

At a step 402 usage data for a plurality of elements of the program state of an item of software 250 during execution is received. Typically, usage data is received from a plurality of instances 260 of the item of software 250. In some cases the usage data comprises a plurality of sets of usage data. Each set of usage data corresponding to usage of the plurality of elements of the program state during execution in a respective execution environment. As such the usage data may represent usage of the plurality of elements across multiple different execution environments, such as different hardware and/or software platforms.

At a step 404, at least one element of the program state is identified as having at least one pre-defined update characteristic based on the received usage data. The step 404 may be carried out by the identification module 222. As discussed above a pre-defined update characteristic may specify any of: a threshold update frequency; a threshold measure of randomness of the values taken by the element of the program state; a threshold measure of entropy of the values taken by the element of the program state; a threshold variance of the values taken by the element of the program state; and so on. Such threshold values may be specified as absolute values, or as relative terms. The pre-defined update characteristics 226 are typically chosen by the user (or operator) to ensure a required randomness of the selected program state element is met, or that a required lack of correlation between the program state elements and the execution paths to be selected between is met.

At a step 406 the item of software 250 (typically in the form of a binary executable) is modified to select between at least two equivalent execution paths of the executable code in dependence on the value of the identified at least one element of the program state. The step 406 may be carried out by the code modification module 224. The step 406 may comprise modifying the executable code to include an alternative second execution path based on a first execution path. Such modification may be done using any of the path diversity protection techniques described above. The step 406 may comprise copying, in the executable code, operations from the first execution path of the executable code to generate the second execution path in the executable code, wherein the second executable path is functionally equivalent to the first execution path. The step 406 may further comprise applying one or more known whitebox obfuscation techniques to one or more of the equivalent execution paths. In this way the alternative execution paths whilst functionally equivalent may comprise different executable code. Such obfuscation techniques are known in the art and not described further herein.

### Update characteristics

Various examples and types of update characteristics 226 are described above and throughout. However, it will be appreciated that the operator of the protection system 220 may select different update characteristics based on any of the nature of the item of software being protected, the nature of likely attacks, the level of security required, and so on. As such, various update characteristics from various types of update characteristic may be used as required. Examples of useful types of update characteristics are set out below.

Update frequency characteristics. These are characteristics which relate to the frequency of update of a program state element. They may specify any of: a direct frequency of update of an element; a variance of the frequency of update of an element (such as whether the update frequency changes by a large amount during execution); a variance of a frequency of update of an element between different runs (or executions) of the item of software. By ensuring high update frequency or high update frequency variability unpredictability (or randomness) in the state element's selection of execution paths may be ensured, rendering the software more resilient to modification or static analysis type attacks.

Value variability characteristics. These are characteristics which relate to the variability (or randomness) of the value taken by the state element. They may specify any of: the range of values taken by an element; the number of values taken by an element; the randomness of values taken by an element (such as the correlation between the previous values of the element and subsequent values of the element). Similarly by ensuring high randomness, or variability in the values taken by the state element during execution unpredictability (or randomness) in the state element's selection of execution paths may be ensured, rendering the software more resilient to modification or static analysis type attacks.

Process (or instance) dependency characteristics. These are characteristics which relate to the run-to-run (or instance by instance) variability of the state element. This may also be thought of as the level of dependence of the value of the state element on the given instance (or process). They may specify any of: the range of values taken by an element across multiple instances; the number of different values taken by an element in respect of different instances; the randomness of values taken by an element across multiple instances (such as the correlation between the values of the element in previous instance and values of the element in subsequent instances); range of start-up (or initial values) of an element across multiple instances. It will also be appreciated that these characteristics may include characteristics that relate to the variability of a state element when the executable code is run within different instances of the same operating system environment, such as following a reboot of the operating system. For example, they may specify any of: the range of values taken by an element across multiple reboots of the operating system; the number of different values taken by an element in respect of multiple reboots of the operating system; the randomness of values taken by an element across multiple reboots of the operating system; range of start-up (or initial values) of an element across multiple reboots of the operating system. By ensuring high run-to-run variability (or process dependence) an attacker attempting to analyze the item of software by repeated runs is hindered. Equally, any malicious modification to an execution path may fail on subsequent runs.

Execution environment dependency characteristics. These are characteristics which relate to the variability of the state element when the item of software is executed on computer systems with different hardware and/or software configurations to each other. This may also be thought of as the level of dependence of the value of the state element on the hardware and/or software configuration. They may specify any of: the range of values taken by an element across multiple execution environments; the number of different values taken by an element in respect of different instances on different execution environments; the randomness of values taken by an element across multiple execution environments; range of start-up (or initial values) of an element across multiple execution environments. By ensuring high execution environment dependency any malicious modification to an execution path may fail when the maliciously modified item of software is executed with a different execution environment, preventing an attacker from effectively distributing a maliciously modified item of software.

Internal progress dependency characteristics. These are characteristics which relate to the internal progress of the item of software. They may specify any of: correlation between the value of a state element and a progress measure of the item of software. For example, in rendering software a state element related to wall time for a render (or processor time for a render) may be desirable as different runs through the item of software will usually result in execution paths being entered at different wall times (or processor times) due the highly variable nature of rendering tasks. Similarly, in a computer game or training system (such as a flight simulator) a state element related to play time or game progress may be desirable as different users will progress through the game at different rates.

It will be appreciated that the above update characteristics may be determined from the usage data made available by dynamic profiling tools as discussed above. By way of some illustrative examples, update frequency characteristics, value variability characteristics, process (or instance) dependency characteristics, execution environment dependency characteristics, and internal progress dependency characteristics may be determined by analysis of user data comprising program state snapshots. In particular, memory snapshots of global variables taken at regular intervals may be used. Calculating differences between these snapshots will typically enable identification of elements having such characteristics. Process (or instance) dependency characteristics may typically be identified from user data comprising return addresses on the call stack upon entering functions of the instance. Value variability characteristics may typically be identified from register contexts upon entering functions of the instance. Also samples of the FPU or SIMD context taken at regular intervals as part of the usage data may also be used to identify state elements having particular value variability characteristics.

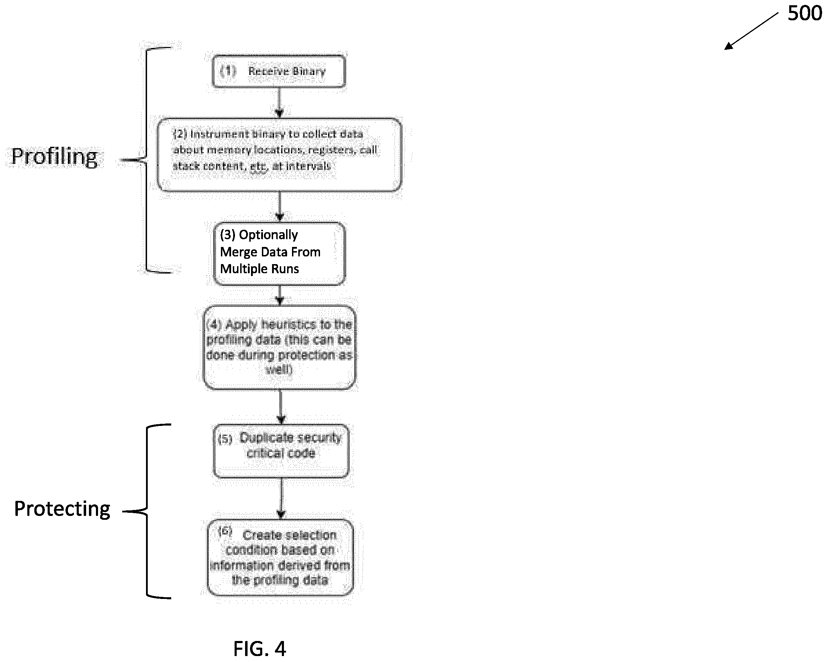

Similarly, by gathering usage data from instances 260 running on systems 100 with different hardware and/or software configurations execution environment dependency characteristics may be identified. As will be appreciated such configurations execution environment dependency characteristics may be identified by comparisons between usage data of given program state elements from systems with different_hardware and/or software configurations. Such comparisons may indicate which program state elements are dependent on (or highly correlated with) changes in the hardware and/or software environment. For example, instances may be run on systems 100 using: different versions of a given operating system (for example different version of Windows 10 or different point releases of macOS), different generations of the same operating system family (for example different major releases of Windows or macOS), or different operating system families (such as running on Windows NT, Windows 10, macOS and openBSD). Similarly, instances running on different hardware configurations may comprise instances running with different GPU and/or different CPUs sharing a common architecture (for example different versions of NVIDIA Tesla GPU). Equally instances running on different hardware configurations may comprise instances running on different architectures (for example running on arm64, x86_64, and POWER9).FIG. 4 illustrates another process 500 for creating secured code (or a protected item of software 240), from original code (or an initial item of software 250), in accordance with an example of disclosed implementations. As set out previously the original code can be binary code or source code. In this example, the original code is binary code. At steps 1, 2, and 3 the binary of original code is profiled in a dynamic manner. At step 1, the original binary code is received. At step 2, a debug tool or other instrumentation tool can be used to collect "snapshots" of memory writes (updates) and other states, periodically during the execution. Collected data can include data about memory registers, call stack content, and other dynamic features of the executing code. For example, the timestamp, list of memory addresses changed, values changed, and the like, can be collected. The profiling data "snapshots" may be collected periodically (triggered by time) or collected in an event-dependent manner (triggered by other events such as entering a function or a basic block, exiting a specific API call, or the like). Further, other state information of the executing program code, such as the content of CPU or FPU register values, call stack content can be collected. It will be appreciated that this collected data and other state information forms the usage data 267 in this example embodiment. The profiling may be accomplished for only one program execution. However, in this example, at 3, the profiling output of each of multiple runs optionally can be merged and the memory writes in different runs can be analyzed to determine which memory locations are consistently active (i.e., change values often).

At step 4, heuristics are applied to the collected profile (or usage) data in order to determine candidate variables (or other elements of the program state) to be used as decision values. Various strategies can be applied to choose among the potential updated memory locations. For example, memory locations or other state indicators can be selected by analyzing the logs obtained during profiling, extracting a heatmap of the device memory and considering only the memory locations or other state indicators that change frequently. During profiling, it is also possible to infer the type of data that is being collected. For example, a value could correspond to a heap memory address, or a value could correspond to a stack address. Note that a program starts with some stack (that may grow in one direction) while a heap is obtained and created at runtime in many places. These address ranges are ordinarily quite distinct in operating systems and are likely different between subsequent program executions due to address space layout randomization. This information can also be used to select elements of the program state as candidate decision values. The heap address is likely random, hence has high variability across program runs, but constant within a process - a desirable property.

Note that the elements of the program state (or state indicators) can include an address and the value at that address, a CPU register and the value of that CPU register, and an FPU register and the value of that FPU register. Further, the state indicator can include metadata relating to one of these elements such as a timestamp indicating when the data was recorded and data indicating why the data was recorded (e.g., as a result of the elapse of a time interval or the occurrence of an event). Metadata can also be an ID to identify the computer/configuration used for the profiling run, an ID/counter, or the like, of the profiling run, etc..

At steps 5 and 6, the original code is rewritten, i.e., changed, based on the profiling logs resulting from step 3 and the subsequent analysis/heuristics of step 4 to thereby produce protected code. The rewriting can include the creation of alternative code paths, such as duplication of security-critical code paths, at step 5, and associating selected decision values (or program state elements) with the code paths as selection conditions for the code paths at step 6. Note that the alternative code paths can be functional equivalents of each other and that such equivalence can be obfuscated through conventional obfuscation techniques. For example, transformations can be applied to the duplicate code paths to make it more difficult to ascertain the existence of duplicate code paths (which knowledge could be used by an attacker to locate the secured portion of code). Note that the phrase "duplicate code", as used herein, includes identical code and/or code variants that may have a slightly different binary representation. Further, the duplicate code paths can have different obfuscations therein.

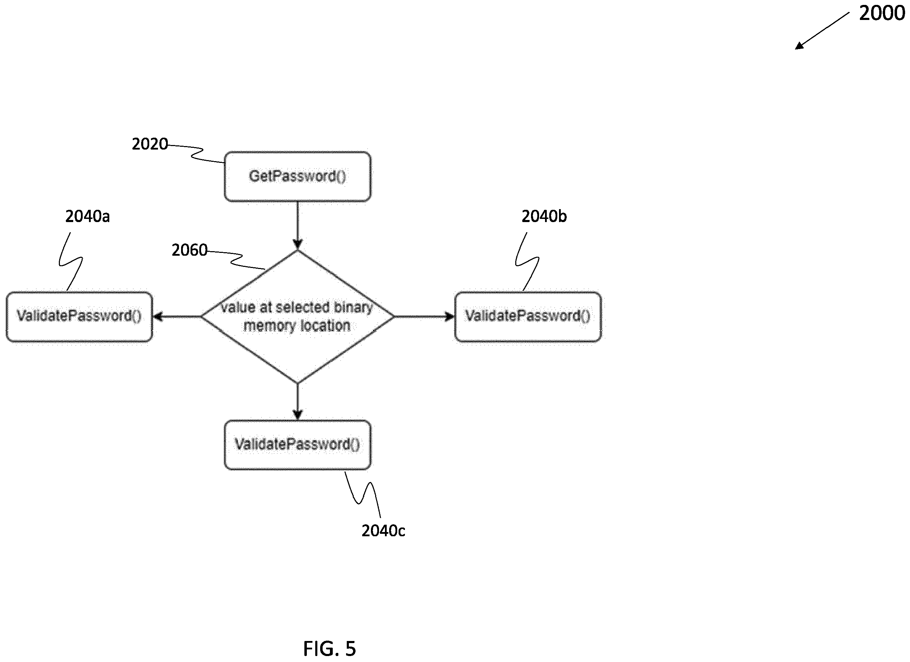

FIG. 5 illustrates an example of code flow in accordance with disclosed implementations. In this example code path 2000, selection is based on a memory location of the binary. However, the selection can be based on a register, call stack content, and the like. In the protected code of this example, GetPassword() function 2020 proceeds to one of ValidatePassword() function 2040a or ValidatePassword() function 2040b or ValidatePassword() function 2040c, depending on the value determined or read from a selected memory location 2060. ValidatePassword() function 2040a, ValidatePassword() function 2040b and ValidatePassword() function 2040c can be functionally equivalent. However, it will be difficult for an attacker to determine which one is being used in any given execution instance and thus the code is more secure.

With the knowledge derived by the profiling, the condition choosing the duplicated instance, (the "decision value") can depend on the program state and external conditions, i.e., conditions that are not part of regular compiler emitted code, (such as the CPU timer, API calls, and the like) can be avoided. This renders the secured code very difficult to successfully attack because the attacker cannot ascertain the source of the decision value. Because the decision value is obtained from an internal memory read, which is a normal operation in execution of the program code, it is difficult to discover the source of the decision value. Further, even if the attacker were to discover the source of the decision value, the attacker cannot successfully attack the code by altering the decision value to assume a desired value because such a change would likely result in incorrect operation of the program. Further, checksumming can be used to prevent an attacker from changing the value being read by changing the selection code.

In the disclosed implementations, the original program code is rewritten by adding multiple execution paths for path diversity, especially in security critical code regions. The decision value can be the value of a memory location or computed by based on multiple memory locations that have been collected. For example, a decision value can be based on memory location 1, memory location 2, and memory location 3. The decision value can be computed to be 1 when memory location 1 has the highest value of the three locations, 2 when memory location 2 has the highest value of the three locations, and when memory location 3 has the highest value of the three locations. The value of 1, 2, or 3 can be used to select three, alternative execution paths. Any computation can be used to derive a decision value from dynamic state indicators, alone or in combination with other conditions.

A sample profile data structure in accordance with disclosed implementations is shown below.
(1) Label: neon::raindropVertices offset: 2645484 firstTime: 8412895800 lastTime: 15444155900
   entropy unique values total 2: 0x6c,0x40,
   Changes during the following timestamps: 8412895800,15444155900,
(2) Label: neon::raindropVertices offset: 1266176 firstTime: 8412895800 lastTime: 15444155900
   entropy unique values total 2: 0xad,0x41,
   Changes during the following timestamps: 8412895800,15444155900,
(3) Label: neon::raindropVertices offset: 1266177 firstTime: 8412895800 lastTime: 15444155900
   entropy unique values total 2: 0x91,0xb5,
   Changes during the following timestamps: 8412895800,15444155900,
(4) Label: neon::raindropVertices offset: 1266178 firstTime: 8412895800 lastTime: 15444155900
   entropy unique values total 2: 0xd6,0xa0,
   Changes during the following timestamps: 8412895800,15444155900,
(5) Label:
   ?s_currentVBufferDataCamera@Gfx2ParticleAccumulationComputeGenerator@neon @@2PAVNeCamera@2@A offset: 208 firstTime: 74924274700 lastTime: 261774418300
   entropy unique values 256:
      0xfa,0xb2,0xf2,0x32,0x53,0x13,0xb,0x4b,0x76,0x4c,0x8c,0x64,0xa4,0xe4,0 x35,0xc7,0x49,0x17,0xbe,0x3e,0xf1,0x31,0xde,0xb8,0xf8,0x79,0xa2,0xae,0 x6e,0xb7,0x91,0x51,0xeb,0x4f,0x98,0x18,0x1a,0x15,0x55,0x30,0xb0,0xa5,0 xe7,0xa7,0x9b,0xd4,0x10,0x96,0x44,0xa0,0xed,0x29,0x61,0x1c,0xe3,0xc6,0 xc3,0x26,0x66,0xe6,0x6f,0x99,0x19,0x3d,0x2f,0x50,0xca,0xcb,0x2d,0x36,0 xbb,0x9c,0xc,0x16,0xc2,0xf9,0x33,0xb4,0xe5,0x3,0xce,0x8a,0xb9,0xf6,0x7 a,0x56,0xff,0xdd,0xb5,0x21,0x78,0x38,0xfe,0xea,0xd1,0x5b,0xe,0x9f,0x20, 0x77,0xdc,0x58,0x71,0xa3,0x5e,0x23,0x73,0x97,0x7e,0xc5,0x74,0x3b,0xbf, 0x40,0x68,0xdb,0x9d,0x84,...
   Changes during the following timestamps:
      74924274700,75961305500,76034276300,76050276900,76069278900,7749 9276700,77555277600,77728302800,77745322400,79056276000,79072277 100,79104299200,79121281900,79157278100,79172279300,79204304800,7 9228274900,79281276100,79498279100,79623276100,79640309200,79658 350300,79708280900,79765338900,79782283600,79836278200,799952844 00,80015275700,80069284000,80085275000,80116291500,80133276600,80 296277100,80317282200,80370278000,80444277400,80492281900,805402 75500,80560281000,80640324900,80660278000,80709289000,8075928200 0,80780296700,..

The example above relates to a software implemented game and the output of the profiler shows labels relating to the game data that changed. Additionally, it shows information regarding the change, such as:
- the offset with reference to the label, so to know on which byte the change happened (for example, the data relating to a single label in profiler outputs (2) to (4) can be three continuous bytes, for which changes were detected at the same time)
- its variability (referred to as "entropy" herein), i.e., the number of unique values that the profiler detected for example)
- timestamp list, with respect to the beginning of the game, of all the times a change was detected.

The entropy and timestamps can be collected within one profiling run or multiple runs executing on a single platform or multiple different platforms (or execution environments). The result shown above is the merged profiling data of all the profiling outputs produced for the same game.

Various heuristics can be applied to the profiling output. For example, one could count the number of times a combination of label plus offset appears in the profiling output to check how active it is (i.e., how often it is updated). As another example, it could be checked if the label is changing several times before a duplicated function is called. To understand the relationship between functions and data, the data sections and their corresponding functions operating on the data sections are profiled in parallel. Then the function-profiler output is combined with the data-profiler output to derive relationships between data and functions. This ensures that the memory location was initialized and that its value has some desirable level of entropy.

For example, label 5 of the example above, generated more than 256 unique values across the different profiling runs. This demonstrates relatively high entropy. The level of entropy desired for any specific code can be determined by one of skill in the art based on the desired level of security and other pragmatic considerations.

The sample code snippet below is the result of processing original code in accordance with disclosed implementations to produce protected code.

| | | | |
|---|---|---|---|
| 143CB8CB4 | 4C:8B25 B36F60FF | mov r12, qword ptr ds:[neon::raindropVerti-ces+1266178] | Using raindrop data to initial-ize condition value to select between duplicated code path |
| 143CB8CBB | 4C:3325 2AC49BFF | xor r12, qword ptr ds:[?s_currentVBufferData-Camera@Gfx2ParticleAccumulationComputeGenera-tor@neon@@2PAVNeCamera@2@A+208] | Combine raindrop data with camera info to add en-tropy to condition value |
| 143CB8CC2 | 52 | push rdx | |
| 143CB8CC3 | 50 | push rax | |
| 143CB8CC4 | 51 | push rcx | |
| 143CB8CC5 | 4C:89E0 | mov rax, r12 | |
| 143CB8CC8 | B9 09000000 | mov ecx, 9 | |
| 143CB8CCD | 31D2 | xor edx, edx | |
| 143CB8CCF | F7F9 | idiv ecx | Use mod to reduce condition value to the number of branches |
| 143CB8CD1 | 59 | pop rcx | |
| 143CB8CD2 | 58 | pop rax | |
| 143CB8CD3 | 41:89D4 | mov r12d, edx | |
| 143CB8CD6 | 5A | pop rdx | |
| 143CB8CDB | 48:8D35 AFDE0500 | lea rsi, qword ptr ds:[Duplicated_Group_128 wrt..imagebase] | Base address for our table of du-plicated code |
| 143CB8CE2 | 4C:01E6 | add rsi, r12 | |
| 143CB8CE5 | 56 | push rsi | |
| 143CB8CE6 | 8B3E | move edi,dword ptr ds:[rsi] | |
| 143CB8CE8 | 81F7 451D4966 | xor edi,66491D45 | Decrypt address to duplicated code |
| 143CB8CEE | 4C:8D3D 0B7334FC | lea r15,qword ptr ds:[_ImageBase wrt ..image-base] | |
| 143CB8CF5 | 4C:01FF | add rdi,r15 | |
| 143CB8CF8 | FFD7 | call rdi | Calling one of the duplicated code path from the group of duplicated code |

The code snippet above is a condensed version of protected code for the sake of showing how applicable data (determined by the profiling disclosed herein) is used to select between duplicated code paths. To decide which duplicated code instance to select, in this example, the addresses of two variables in the code, a game, were accessed. Specifically, and address within the raindrop vertices was combined with an address within the camera info data. This example combines two labels. However, any number one or more labels can be used. It is most desirable to use labels, or a combination of labels, resulting in high entropy, such as the camera in this example. Also, labels with lower entropy can be combined to increase the entropy output.

In the example the duplicated function's label is obtained from a table called "Duplicated_Group_128" (see address 0000000143CB8CDB). A label can be any symbolic information for one or more memory addresses. Using labels instead of memory addresses is advantageous in that, in subsequent versions of a (binary) computer program, the memory address of e.g. a variable may change at the discretion of the compiler (possibly only slightly due to adding or removing some other variable), while the name of the variable (i.e. the label) remains valid and conveys the same information. The "Duplicated_Group_128" table contains all the references to the duplicated code, and it is combined with the output of the mod operation (idiv instruction), which works as an index. Therefore, the duplicated instance of code that will be executed can be determined from the two combined values read from the addresses (and used as a decision value. Given the properties of the values read, different code paths will be selected over the runtime of the code. Different methods can be applied like switch statements, such as if conditions, and other program constructs to select which duplicate instance will be called based on the game data input.

It will be appreciated that additional dependencies of the execution path on the identified program state element may further be introduced into the secured item of software 240 to further improve tamper resistance. In a variant embodiment of the protection system 220 shown in figure 2b the code modification unit 224 is configured to modify at least one operation in at least one of the equivalent execution paths such that an intermediate result in the executable path is dependent on the value of the at least one element of the program state. The modification is made such that the functionality of the modified execution path is unchanged, providing that the value of the at least one element of the program state is an expected value (or one of a set of expected values). In this way, providing that item of software is arranged such that the modified executable path is only selected when the value of the at least one element of the program state is the expected value (or one of the set of expected values) the functionality of the item of software is preserved. However, should an attacker seek to circumvent the path diversity by forcing the selection of the modified execution path, the functionality of the item of software will not be assured as the modified execution path will be taken in situations where the value of the at least one element of the program state is not the expected value, breaking the functional equivalence of the modified execution path.

The code modification unit 224 may be arranged to modify the execution path by modifying a first operation to alter the intermediate result based on the value of the at least one element of the program state and modifying a second operation to compensate for (or undo or otherwise invert) the alteration based on an expected value for the at least one element of the program state. For example, the first operation may be modified to include the action of a binary operator on the intermediate result and the value of the at least one element of the program state and the second operation may be modified to include the action of the corresponding inverse binary operator on an intermediate value (which may be the same or a consequential intermediate value) and the expected value of the at least one element of the program state.

The code example below illustrates an example of such execution path modification.

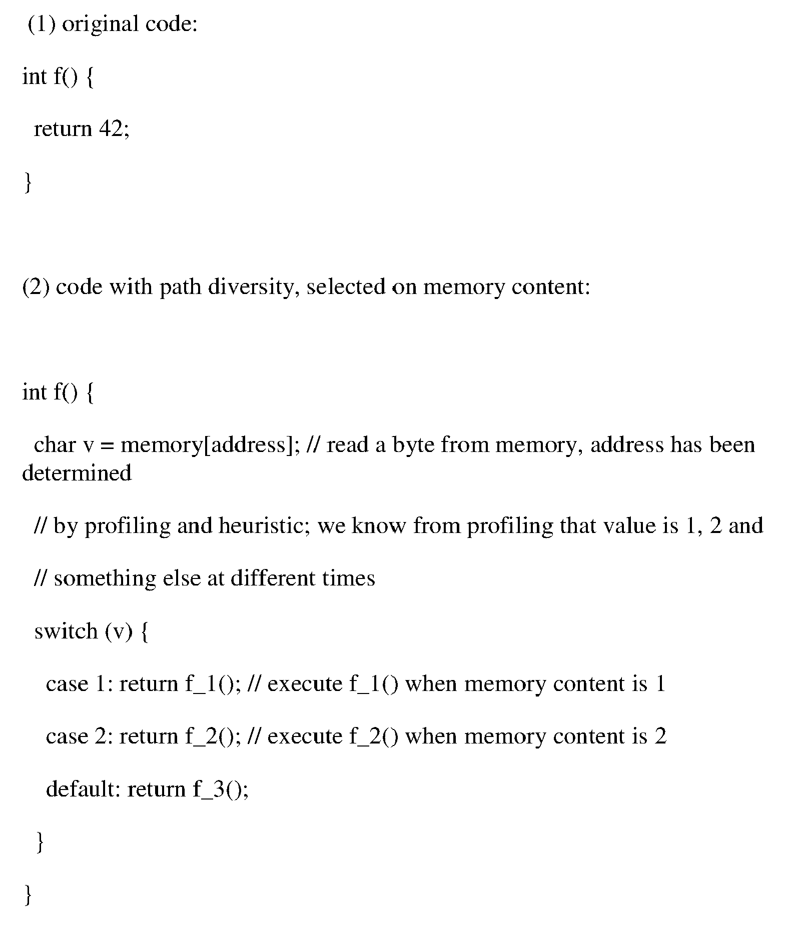

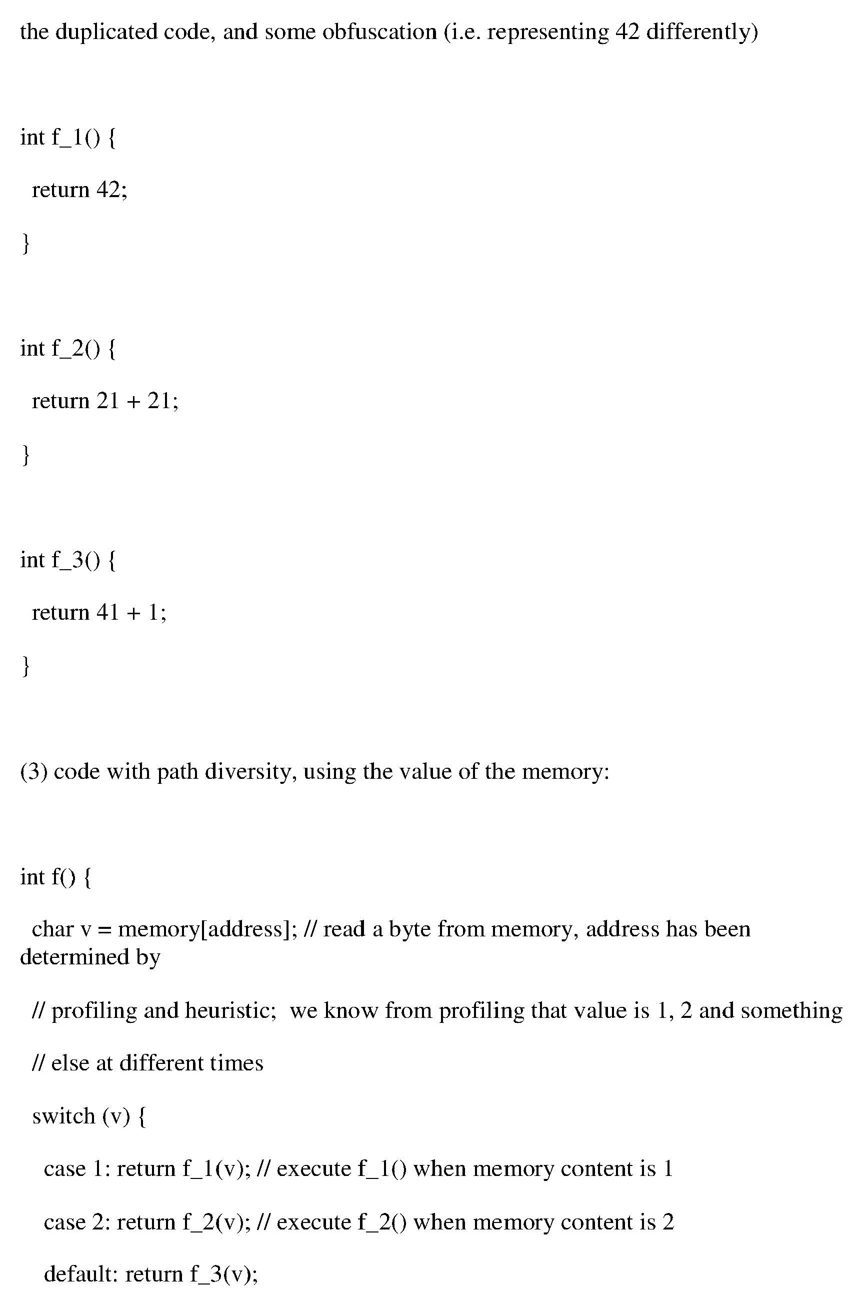

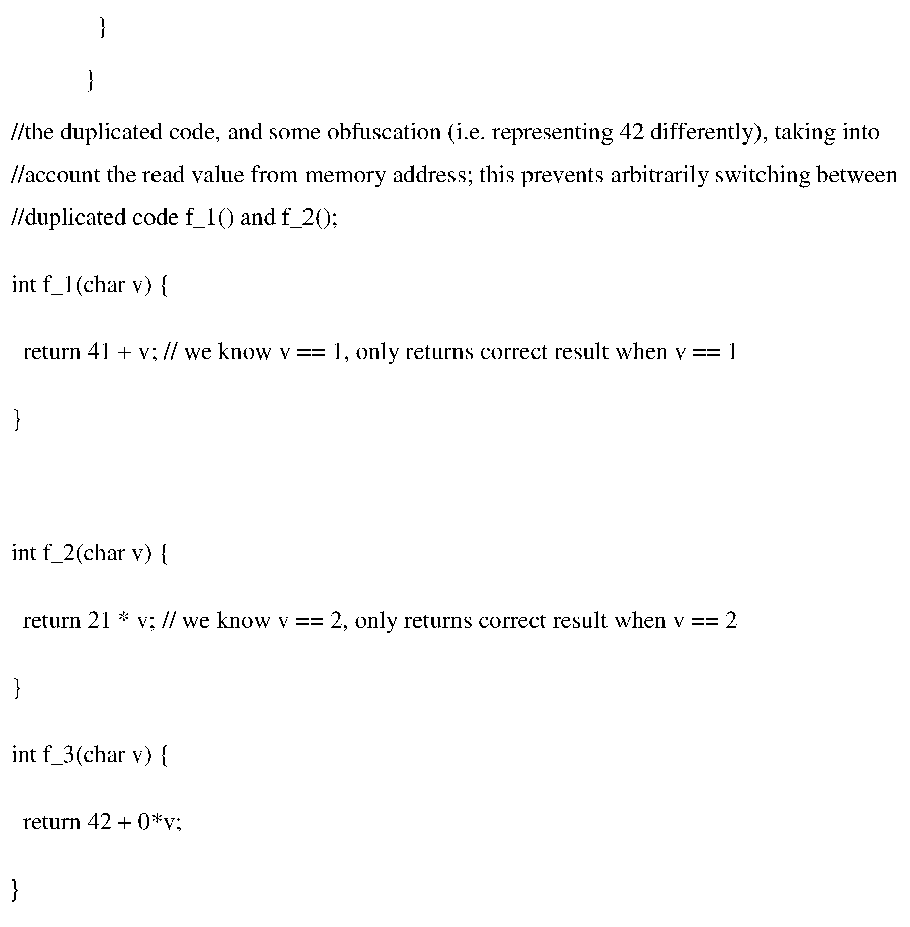

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements. It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

### Various examples and embodiments of the invention are set out in the following numbered paragraphs

NP1. A method of creating secured executable code by increasing the path diversity of original code, the method comprising:
dynamically profiling the original code to collect data relating to update characteristics of one or more state indicators of the original code during execution of the original code;
selecting at least one state indicator from amongst the one or more state indicators based on the dynamic profiling; and
adding at least one new alternative execution path to the original binary code to thereby create the secured code, wherein execution of the at least one new alternative execution path is dependent on the value of the at least one state indicator.

NP2. The method of NP1, wherein the selecting step includes selecting the at least one state indicator based on a determination that the at least one state indicator is frequently updated during execution of the original code.

NP3. The method of NP1, wherein the dynamically profiling includes collecting at least one data snapshot of the original code during execution of the original binary code.

NP4. The method of NP3, wherein the at least one data snapshot is collected from at least one of multiple executions of the original code on a single device or multiple executions of the original code on multiple devices.

NP5. The method of NP1, wherein the at least one state indicator includes at least one of:
an address and the value at that address;
a CPU register and the value of that CPU register; and
an FPU register and the value of that FPU register.

NP6. The method of NP5, wherein the state indicator further includes metadata relating to the at least one of:
the address and the value at that address;
the CPU register and the value of that CPU register; and
the FPU register and the value of that FPU register.

NP7. The method of NP4, wherein the at least one data snapshot is collected periodically based on time or the occurrence of events.

NP8. The method of NP7, wherein the events are at least one of a specific API call or a function call.

NP9. The method of NP1, wherein the original code is binary code.

NP10. The method of NP9, wherein the binary code is in one of the following formats:
Windows PE32/PE32+ executable format;
x64 or x86 instruction set format;
ELF format,
ARM32 format;
ARM64 format,

NP11. The method of NP1, wherein the original code is source code.

NP12. The method of NP1, wherein the at least one alternate execution path is a functionally equivalent alternative to an original execution path in the original code.

NP13. The method of NP11, further comprising applying obfuscation techniques to at least one of reading of the condition value, selection of a path, the at least one alternative execution path, the original execution path, and other portions of the secured code..

NP14. The method of NP1, wherein and effect of operations of the at least one alternate execution path is different from an effect of operations of the original execution path, whereby the functions resulting from the execution of the protected code vary based on the state indicator.

NP15. The method of NP1 wherein the state indicators are associated with symbolic information and the symbolic information is used to make the at least one execution path dependent on the at least one state indicator.

NP16. The method of NP15, wherein the symbolic information is at least one of debug symbols, and variables names.

NP17. A computer system for creating secured executable code by increasing the path diversity of original code, the system comprising:
at least one computer processor; and
at least one memory having instructions stored thereon which, when executed by the at least one computer processor, cause the at least one computer processor to:
   dynamically profile the original code to collect data relating to update characteristics of one or more state indicators of the original code during execution of the original code;
   select at least one state indicator from amongst the one or more state indicators based on the dynamic profiling; and
   add at least one new alternative execution path to the original binary code to thereby create the secured code, wherein execution of the at least one new alternative execution path is dependent on the value of the at least one state indicator.

NP18. The system of NP17, wherein select includes selecting the at least one state indicator based on a determination that the at least one state indicator is frequently updated during execution of the original code.

NP19. The system of NP17, wherein the dynamically profile includes collecting at least one data snapshot of the original code during execution of the original binary code.

NP20. The system of NP19, wherein the at least one data snapshot is collected from at least one of multiple executions of the original code on a single device or multiple executions of the original code on multiple devices.

NP21. The system of NP17, wherein the at least one state indicator includes at least one of:
an address and the value at that address;
a CPU register and the value of that CPU register; and
an FPU register and the value of that FPU register.

NP22. The system of NP21, wherein the state indicator further includes metadata relating to the at least one of:
the address and the value at that address;
the CPU register and the value of that CPU register; and
the FPU register and the value of that FPU register.

NP23. The system of NP20, wherein the at least one data snapshot is collected periodically based on time or the occurrence of events.

NP24. The system of NP23, wherein the events are at least one of a specific API call or a function call.

NP25. The system of NP17, wherein the original code is binary code.

NP26. The system of NP25, wherein the binary code is in one of the following formats:
Windows PE32/PE32+ executable format;
x64 or x86 instruction set format;
ELF format,
ARM32 format;
ARM64 format,

NP27. The system of NP17, wherein the original code is source code.

NP28. The system of NP17, wherein the at least one alternate execution path is a functionally equivalent alternative to an original execution path in the original code.

NP29. The system of NP27, further comprising applying obfuscation techniques to at least one of reading of the condition value, selection of a path, the at least one alternative execution path, the original execution path, and other portions of the secured code..

NP30. The system of NP17, wherein an effect of operations of the at least one alternate execution path is different from an effect of operations of the original execution path, whereby the functions resulting from the execution of the protected code vary based on the state indicator.

NP31. The method of NP17 wherein the state indicators are associated with symbolic information and the symbolic information is used to make the at least one execution path dependent on the at least one state indicator.

NP32. The method of NP31, wherein the symbolic information is at least one of debug symbols, and variables names.

## Claims

1. A method of securing executable code, the method comprising:
receiving usage data for a plurality of elements of the program state of the executable code during execution;
identifying, from the received usage data, at least one element of the program state having at least one pre-defined update characteristic; and
modifying the executable code to select between at least two equivalent execution paths of the executable code in dependence on the value of the identified at least one element of the program state.

2. The method of claim 1 wherein the step of modifying comprises copying, in the executable code, operations from a first execution path of the executable code to generate a second execution path in the executable code, wherein the second executable path is functionally equivalent to the first execution path.

3. The method of claim 2 wherein an operation in the second execution path is modified such that an intermediate result in the second executable path is dependent on the value of the at least one element of the program state.

4. The method of claim 3 wherein a first modified operations alters the intermediate result based on the value of the at least one element of the program state and a second modified operation compensates for the alteration based on an expected value for the at least one element of the program state.

5. The method of any preceding claim further comprising, receiving call data for the first callable unit in one of the execution paths, wherein the step of identifying is identifying, from the received usage data and the received call data, the at least one element of the program state having the at least one pre-defined update characteristic at the start of the execution path.

6. The method of claim 5 wherein the call data is generated by dynamically profiling the executable code.

7. The method of any preceding claim wherein the usage data is generated by dynamically profiling the executable code.

8. The method of claim 6 or 7 wherein the dynamically profiling includes collecting a plurality of snapshots of the program state during execution, optionally wherein the plurality of snapshots are collected periodically based on time or the occurrence of events.

9. The method of any preceding claim wherein the usage data comprises usage data generated during a plurality of execution instances of the executable code

10. The method of any preceding claim wherein the usage data comprises a plurality of sets of usage data, each set of usage data corresponding to the usage of the plurality of elements of the program state during execution in a respective execution environment.

11. The method of any preceding claim wherein an element of the program state corresponds to any of:
a main memory address;
a cache memory address;
a framebuffer address;
a CPU register;
a GPU register;
an FPU register;
a part of a call stack;
a variable of the executable code; and
an address relating to a symbol of the executable code.

12. The method of any preceding claim wherein the usage data comprises one or more metrics for each of the plurality of elements of the program state.

13. The method of claim 12 wherein a metric is any of:
a measure of update frequency of an element of the program state during execution;
a measure of a range of values taken by an element of the program state during execution;
a measure of variance of the values taken by an element of the program state during execution;
a number of updates of an element of the program state during execution;
the values taken by an element of the program state during execution.

14. The method of claim 12 or 13 wherein the pre-defined update characteristic requires the element of the program state to having at least a threshold level of a metric.

15. The method of any preceding claim wherein the pre-defined update characteristic specifies any of:
an update frequency;
a measure of randomness of the values taken by the element of the program state;
a measure of entropy of the values taken by the element of the program state;
a variance of the values taken by the element of the program state.

16. An apparatus arranged to carry out a method according to any one of claims 1 to 15.

17. A computer-readable medium storing a computer program which, when executed by a processor, causes the processor to carry out a method according to any one of claims 1 to 15.
